# EUROPEAN PATENT SPECIFICATION

(11) **EP 4 329 002 B1**
(45) Date of publication and mention of the grant of the patent: **18.11.2026**
(21) Application number: 23771083.5
(22) Date of filing: 15.03.2023
(51) Int. Cl.: H01M 4/134, H01M 4/02, H01M 4/04, H01M 4/36, H01M 4/38, H01M 4/58, H01M 4/485, H01M 4/1395, H01M 10/052

(54) **ANODE FOR LITHIUM SECONDARY BATTERY, AND MANUFACTURING METHOD THEREFOR**
ANODE FÜR LITHIUMSEKUNDÄRBATTERIE UND HERSTELLUNGSVERFAHREN DAFÜR
ANODE POUR BATTERIE SECONDAIRE AU LITHIUM ET SON PROCÉDÉ DE FABRICATION

(30) Priority: 17.03.2022 KR 20220033238
(43) Date of publication of application: 28.02.2024
(73) Proprietor: LG ENERGY SOLUTION, LTD., Seoul 07335 (KR)
(72) Inventor: LEE, Keonje, Daejeon 34122 (KR); KIM, Kihyun, Daejeon 34122 (KR)
(74) Representative: Goddar, Heinz J.
(86) International application number: PCT/KR2023/003459
(87) International publication number: WO 2023/177204

(56) References cited:
- CN-A- 112 421 097
- JP-A- 2002 141 058
- JP-A- 2021 106 147
- KR-A- 20020 091 748
- KR-A- 20180 041 086
- KR-A- 20180 077 083
- US-A1- 2021 020 949

## Description

### [Technical Field]

One aspect of the present disclosure relates to a negative electrode for a lithium secondary battery and a manufacturing method thereof.

### [Background Art]

With the rapid development of the electronics, communication, and computer industries, the application field of energy storage technology is expanding to camcorders, mobile phones, laptops, PCs, and even electric vehicles. Accordingly, the development of high-performance secondary batteries that are lightweight, long-lasting, and highly reliable is ongoing, and in particular, as a battery that satisfies these requirements, a lithium secondary battery is in the limelight.

The lithium secondary battery has a structure, in which an electrode assembly comprising a positive electrode, a negative electrode, and a separator interposed between the positive electrode and the negative electrode is stacked or wound, and is constructed by inserting this electrode assembly into a battery case and injecting a non-aqueous electrolyte solution into it. The lithium secondary battery produces electrical energy by oxidation and reduction reactions when lithium ions are intercalated/deintercalated from a positive electrode and a negative electrode.

In general, lithium metal, carbon, etc. are used as active materials for the negative electrode of the lithium secondary battery, and lithium oxide, transition metal oxide, metal chalcogen compound, electrically conductive polymer, etc. are used as active materials for the positive electrode.

In the case of a lithium secondary battery using positive electrode material for high voltage, a side reaction in which the electrolyte is oxidized may occur on the surface of the positive electrode during charging. In this case, the surface of the positive electrode is sometimes made into a protective layer to prevent the degradation of the performance of the battery due to oxidation of the electrolyte. Since most of the protective layer is formed by a method (ALD, Sol-gel, organic coating, etc.) of manufacturing an electrode after coating to the positive electrode material, the price may increase due to this.

In addition, when the lithium secondary battery using lithium metal as a negative electrode is operated, electron density non-uniformity may occur on the surface of the lithium metal due to various factors. As a result, lithium dendrites in the form of branches are generated on the surface of the electrode, and protrusions are formed or grown on the surface of the electrode, thereby making the surface of the electrode very rough. These lithium dendrites cause damage to the separator and short circuit of the battery in severe cases along with the degradation of the performance of the battery. As a result, there is a risk of explosion and fire of the battery due to an increase in the temperature inside the battery.

In addition, lithium used in electrodes, especially lithium electrodes, is highly reactive with the components of the electrolyte solution, and thus when the components of the electrolyte solution come into contact with lithium metal, a film called a passivation layer is formed by a spontaneous reaction. During charging and discharging, the passivation layer formed on the surface of lithium repeats destruction and formation, and thus when the battery is repeatedly charged and discharged, there is a problem that the components of the passivation layer in the lithium negative electrode are increased and the electrolyte solution is depleted. In addition, some reduced substances in the electrolyte solution cause side reactions with lithium metal, thereby accelerating the consumption of lithium. As a result, the lifetime of the battery is reduced.

Accordingly, various studies have been conducted to stabilize lithium metal, and as part of these studies, a method of forming a protective layer at a position in contact with the negative electrode has been proposed.

For example, LiF is actively being studied to apply it to the protective layer of a lithium negative electrode, due to its high chemical stability. Among them, cases in which lifetime characteristics are improved by applying LiF to the protective layer of the lithium negative electrode through a substitution reaction with metal fluoride have been reported.

Chinese Laid-open Patent Publication No. 109671908 proposes a method of forming a protective layer on the lithium negative electrode by coating metal fluoride powder on lithium and then heat-treating or hot-pressing it. However, there is a problem in that the coating of the powder is non-uniform and lithium is oxidized due to heat treatment, and thus there is a limit to the formation of a protective layer containing LiF.

In addition, Korean Laid-open Patent Publication No. 2018-0041086 proposes a method of forming a protective layer on a lithium negative electrode by coating a slurry containing fluorocarbon, a metal fluoride, and a binder. Since the metal fluoride has low reactivity and exists in a simple dispersed state without being dissolved in a solvent, there is a problem in that LiF is not smoothly formed by the spontaneous reaction of the metal fluoride.

Therefore, during operation of the lithium secondary battery, there is a demand for development of a technology capable of incorporating LiF into the protective layer by allowing LiF, which is a material exhibiting high chemical stability, to be smoothly formed on the protective layer of the negative electrode of the lithium secondary battery.

### [Prior Art Document]

### [Patent Document]

(Patent Document 1) Chinese Laid-open Patent Publication No. 109671908
(Patent Document 2) Korean Laid-open Patent Publication No. 2018-0041086
(Patent Document 3) Chinese Laid-open Patent Publication No. 112421097 discloses a negative electrode comprising a lithium metal electrode coated with an interface modification layer comprising an additive containing copper fluoride, a binder, and a lithium salt.

### [Disclosure]

### [Technical Problem]

The present inventors have conducted research in various ways to solve the above problems, and as a result, formed a protective layer by solution coating a solution containing metal fluoride, a binder, and a lithium salt on lithium metal, and confirmed that a layer containing LiF is additionally formed between the lithium metal and the protective layer during operation of the battery, thereby improving the lifetime characteristics of the battery.

Accordingly, it is an object of one aspect of the present disclosure to provide a negative electrode for a lithium secondary battery having a protective layer capable of improving the lifespan characteristics of the battery and a manufacturing method thereof.

### [Technical Solution]

In order to achieve the above object, one aspect of the present disclosure provides a negative electrode for a lithium secondary battery, comprising a lithium metal layer and a first protective layer,
wherein the first protective layer includes a metal fluoride represented by Formula 1, a binder, and a lithium salt:

   <Formula 1> MFx
wherein M is Mg, Zn, Sn, Cu, Al, Ag, Ba, Co, Ca, Ni, Ta, B, Mn, In or Fe, and x is 1 to 7,
wherein the first protective layer comprises 5 to 10% by weight of the metal fluoride, 50 to 70% by weight of the binder, and 20 to 40% by weight of the lithium salt,
wherein the negative electrode for the lithium secondary battery further comprises a second protective layer formed between the lithium metal layer and the first protective layer and the second protective layer contains LiF, and
wherein the second protective layer further comprises at least one selected from the group consisting of LiNxOy(wherein x is 1 or 2, and y is 2 or 3), Li₃N, Li₂O, Li₂CO₃, Li₂S and Li₂S₂.

In one embodiment of one aspect of the present disclosure, the binder may comprise at least one selected from the group consisting of polyvinylidene fluoride-co-hexafluoropropylene (PVDF-HFP), polyvinylidene fluoride (PVDF), polyvinyl alcohol (PVA), polyacrylic acid (PAA), polymethacrylic acid (PMA), polymethyl methacrylate (PMMA), polyacrylamide (PAM), polymethacrylamide (PMAM), polyacrylonitrile (PAN), polymethacrylonitrile (PMN) and polyimide (PI).

In one embodiment of one aspect of the present disclosure, the lithium salt may comprise at least one selected from the group consisting of (CF₃SO₂)₂NLi, (FSO₂)₂NLi, LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN and LiC (CF₃SO₂)₃.

In addition, another aspect of the present disclosure provides a method for manufacturing a negative electrode for a lithium secondary battery, comprising the steps of (S1) preparing a solution by dissolving metal fluoride and lithium salt in a solvent; (S2) preparing a coating solution for forming a first protective layer by adding a binder to the solution; and (S3) applying the coating solution for forming the first protective layer on the lithium metal and drying it,
wherein after forming the negative electrode for the lithium secondary battery, a second protective layer containing LiF is formed between the lithium metal layer and the first protective layer during operation of the lithium secondary battery.

In one embodiment of one aspect of the present disclosure, the solvent may comprise at least one selected from the group consisting of dimethoxyethane (DME), tetrahydrofuran (THF), dimethyl sulfoxide (DMSO), 1-methyl-2-pyrrolidone (NMP) and dimethyl formamide (DMF).

In one embodiment of one aspect of the present disclosure, the coating method may be bar coating, roll coating, spin coating, slit coating, die coating, blade coating, comma coating, slot die coating, lip coating or solution casting.

The other aspect of the present disclosure also provides a lithium secondary battery comprising a positive electrode, the negative electrode described above, a separator, and an electrolyte.

In one embodiment of one aspect of the present disclosure, the positive electrode may be for a lithium-sulfur secondary battery comprising sulfur.

The positive electrode may be for a lithium metal battery comprising at least one positive electrode active material selected from the group consisting of nickel ·cobalt ·manganese oxide (NCM, [Ni, Co,Mn]O₂), nickel·cobalt·manganese·aluminum oxide (NCMA, [Ni,Co,Mn,Al]O₂) and lithium iron phosphate (LFP, LiFePO₄).

### [Advantageous Effects]

According to one aspect of the present disclosure, the growth of lithium dendrites can be suppressed due to the protective layer formed on the negative electrode for the lithium secondary battery, thereby improving the lifetime characteristics of the battery.

In addition, during operation of the lithium secondary battery, a separately formed layer containing LiF having high chemical stability is formed between the negative electrode protective layer and lithium metal, thereby exhibiting an effect of improving the performance of the battery.

### [Description of Drawings]

FIG. 1a is a schematic diagram showing a longitudinal section of a negative electrode for a lithium secondary battery, and FIG. 1b is a schematic diagram showing a longitudinal section of the negative electrode for the lithium secondary battery according to an embodiment of the invention.
FIG. 2 is a graph showing the results of XPS (X-ray photoelectron spectroscopy) analysis for protective layers of negative electrodes of lithium-sulfur secondary batteries manufactured in Comparative Example 1 and Example 1.
FIG. 3 is a graph showing the results of evaluation of lifetime characteristics of protective layers of negative electrodes of lithium-sulfur secondary batteries manufactured in Comparative Example 1 and Example 1.

### [Best Mode]

Hereinafter, the present invention will be described in more detail to aid understanding of the present invention.

The terms and words used in the present specification and claims should not be construed as limited to ordinary or dictionary meanings, and should be construed in a sense and concept consistent with the technical idea of one aspect of the present disclosure, based on the principle that the inventor can properly define the concept of a term to describe his invention in the best way possible.

### Negative electrode for lithium secondary battery

one aspect of the present disclosure relates to a negative electrode for a lithium secondary battery.

According to one embodiment according to one aspect of the present disclosure, the negative electrode for the lithium secondary battery comprises a lithium metal layer; a second protective layer formed on the lithium metal layer; and a first protective layer formed on the second protective layer. The second protective layer means a LiF containing layer formed by metal fluoride, which is a fluorine source comprised in the first protective layer, and lithium comprised in the lithium metal layer, during operation of the battery. Due to LiF exhibiting chemically stable characteristics, the lifetime characteristics of the battery can be further improved.

Hereinafter, the present invention will be described in more detail with reference to the drawings.

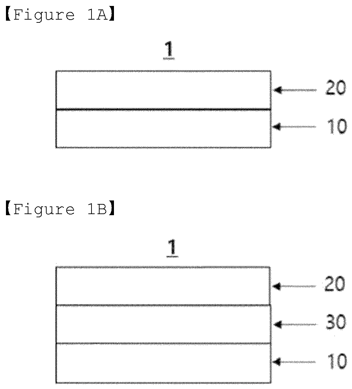

FIG. 1A is a schematic diagram showing a longitudinal section of the negative electrode for a lithium secondary battery.

Referring to FIG. 1A, the negative electrode 1 for the lithium secondary battery includes a lithium metal layer 10; and a first protective layer 20 formed on the lithium metal layer 10.

In one aspect of the present disclosure, the lithium metal layer may be a conventional lithium metal-containing layer used for a lithium negative electrode, and for example, the lithium metal layer may be a lithium foil.

The lithium metal included in the lithium metal layer may serve as a lithium (Li) source for forming LiF of the second protective layer.

In one aspect of the present disclosure, the first protective layer is formed on the lithium metal layer, and thus can suppress the growth of lithium dendrites during operation of the battery, and prevent a side reaction between the lithium metal layer and the electrolyte, thereby improving the lifetime characteristics of the battery.

The first protective layer comprises a metal fluoride represented by Formula 1, a binder, and a lithium salt:

<Formula 1> MFx

wherein M is Mg, Zn, Sn, Cu, Al, Ag, Ba, Co, Ca, Ni, Ta, B, Mn, In or Fe, and x is 1 to 7.

In addition, in the first protective layer, metal fluoride and lithium salt may be included in the binder matrix in a mixed state.

In addition, the thickness of the first protective layer may be 0.1 µm to 10 µm, specifically, may be 0.1 µm or more, 1 µm or more, or 3 µm or more, and may be 7 µm or less, 8 µm or less, or 10 µm or less. If the thickness of the first protective layer is less than 0.1 µm, the effect of inhibiting the growth of lithium dendrites and the effect of preventing side reactions between the lithium metal layer and electrolyte may be reduced. If the thickness of the first protective layer exceeds 10 µm, it may act as resistance during operation of the battery.

As described above, the metal fluoride may serve as a fluorine (F) source for LiF, which is a constituent material of the second protective layer formed after operation of the battery.

In addition, the metal fluoride is included in an amount of 5% by weight or more, and 10% by weight or less. If the content of the metal fluoride is less than 1% by weight, it is difficult to form the second protective layer containing LiF. If the content of the metal fluoride exceeds 15% by weight, the second protective layer may be formed too thick and thus the ionic conductivity may be decreased.

The binder allows the first protective layer to be well formed and maintained in the form of a layer, and may play a role of well storing metal fluoride necessary for forming the second protective layer in the first protective layer.

The binder may include at least one polymeric binder selected from the group consisting of polyvinylidene fluoride-co-hexafluoropropylene (PVDF-HFP), polyvinylidene fluoride (PVDF), polyvinyl alcohol (PVA), polyacrylic acid (PAA), polymethacrylic acid (PMA), polymethyl methacrylate (PMMA), polyacrylamide (PAM), polymethacrylamide (PMAM), polyacrylonitrile (PAN), polymethacrylonitrile (PMN) and polyimide (PI).

In addition, the binder is included in 50 to 70% by weight based on the total weight of the first protective layer. Specifically, the content of the binder may be 50% by weight or more, 55% by weight or more, or 60% by weight or more, and may be 65% by weight or less, 68% by weight or less, or 70% by weight or less. If the content of the binder is less than 50% by weight, it may be difficult to form the first protective layer in the form of a layer. If the content of the binder exceeds 70% by weight, it may be difficult to form the first protective layer having a sufficient thickness.

The lithium salt may increase the solubility of the metal fluoride in the electrolyte by a co-solvation effect, thereby serving to help form LiF, which is a constituent material of the second protective layer formed after operation of the battery, as described above.

The lithium salt may comprise at least one selected from the group consisting of (CF₃SO₂)₂NLi(LiTFSI, Lithium bis(trifluoromethanesulphonyl)imide), (FSO₂)₂NLi(LiFSI, Lithium bis(fluorosulfonyl)imide), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

In addition, the lithium salt is comprised in an amount of 20 to 40% by weight based on the total weight of the first protective layer. Specifically, the content of the lithium salt may be 20% by weight or more, 25% by weight or more, or 28% by weight or more, and may be 33% by weight or less, 35% by weight or less, or 40% by weight or less. If the content of the lithium salt is less than 20% by weight, it may be difficult to form the second protective layer containing LiF. If the content of the lithium salt exceeds 40% by weight, the second protective layer may be formed too thick and, accordingly, the ionic conductivity may be decreased.

FIG. 1B is a schematic diagram showing a longitudinal section of the negative electrode for the lithium secondary battery according to another embodiment of the invention.

Referring to FIG. 1A, the negative electrode 1 for the lithium secondary battery according to an embodiment of the invention includes a lithium metal layer 10; a second protective layer 30 formed on the lithium metal layer 10; and a first protective layer 20 formed on the second protective layer 30.

The second protective layer is formed during operation of a lithium secondary battery. Specifically, when the lithium secondary battery is operated, the binder contained in the first protective layer is swollen into the electrolyte, the metal fluoride and lithium salt are dissociated into the electrolyte, and the dissociated ions begin to be released to the outside of the first protective layer by the concentration gradient. The released fluorine ions (F⁻) spontaneously react with the lithium metal during charging and discharging. In this case, the lithium metal may be lithium metal contained in the lithium metal layer. Accordingly, a new layer containing LiF is formed between the lithium metal layer and the first protective layer, which is referred to as the second protective layer.

The second protective layer contains LiF, and at least one selected from the group consisting of LiNxOy (wherein x is 1 or 2, and y is 2 or 3), Li₃N, Li₂O, Li₂Co_{3,} Li₂S and Li₂S₂.

In one aspect of the present disclosure, the lithium metal layer may be formed on the negative electrode current collector.

The type of the negative electrode current collector is not particularly limited in one aspect of the present disclosure, and known materials can be used. For example, the negative electrode current collector is not particularly limited as long as it has electrical conductivity without causing a chemical change in the relevant battery. For example, copper, stainless steel, aluminum, nickel, titanium, sintered carbon, copper or stainless steel surface-treated with carbon, nickel, titanium, or silver; aluminum-cadmium alloy may be used as the negative electrode current collector. Also, as with the positive electrode current collector, the shape of the negative electrode current collector can be various forms such as a film having fine irregularities on its surface, sheet, foil, net, porous body, foam, and nonwoven fabric.

### Manufacturing method of negative electrode for lithium secondary battery

Another aspect of the present disclosure also relates to a method for manufacturing a negative electrode for a lithium secondary battery, and the method of manufacturing the negative electrode for the lithium secondary battery includes the steps of (S1) preparing a solution by dissolving metal fluoride and lithium salt in a solvent; (S2) preparing a coating solution for forming a first protective layer by adding a binder to the solution; and (S3) applying the coating solution for forming the first protective layer on the lithium metal and drying it,
wherein after forming the negative electrode for the lithium secondary battery, a second protective layer containing LiF is formed between the lithium metal layer and the first protective layer during operation of the lithium secondary battery.

The method for manufacturing the negative electrode for the lithium secondary battery according to another aspect of the present disclosure can form a uniform first protective layer using a simple solution coating process, thereby improving the efficiency of the process and reducing the cost consumed in the process, as described above.

Hereinafter, the present invention will be described in more detail for each step.

In another aspect of the present disclosure, in step (S1), the metal fluoride and the lithium salt are dissolved in a solvent to form a solution. The types and contents of the metal fluoride and the lithium salt are as described above.

The solvent is not particularly limited as long as it can dissolve the metal fluoride and the lithium salt and has aprotic properties. For example, the solvent may include at least one selected from the group consisting of dimethoxyethane (DME), tetrahydrofuran (THF), dimethyl sulfoxide (DMSO), 1-methyl-2-pyrrolidone (NMP) and dimethyl formamide (DMF).

The concentration of the solution is not particularly limited as long as it is a concentration sufficient to dissolve the metal fluoride and the lithium salt.

In another aspect of the present disclosure, in step (S2), the binder is added to the solution to prepare a coating solution for forming a first protective layer. The type and content of the binder are as described above.

The concentration of the coating solution for forming the first protective layer is not particularly limited as long as it is a concentration sufficient to smoothly perform the coating process. For example, the concentration of the coating solution for forming the first protective layer may be 15 to 30% by weight.

In another aspect of the present disclosure, in step (S3), the negative electrode for the lithium secondary battery including the lithium metal layer and the first protective layer are manufactured by applying the coating solution for forming the first protective layer on the lithium metal and drying the coating solution.

The coating method is not particularly limited as long as it is a coating method commonly used in the art. For example, the coating method may be bar coating, roll coating, spin coating, slit coating, die coating, blade coating, comma coating, slot die coating, lip coating or solution casting.

The drying may be performed at room temperature. If the solvent used in the step (S1) is a solvent that is difficult to volatilize at room temperature, vacuum drying may be performed at 80 to 120 °C. Among the solvents, DME and THF have high volatility, and thus the drying may be performed at room temperature, a separate drying process may not be required, and a solvent that is difficult to volatilize at room temperature may be DMSO, NMP, or DMF.

Through the steps (S1) to (S3) as described above, the negative electrode for the lithium secondary battery having a first protective layer formed on the lithium metal layer can be manufactured.

When the lithium secondary battery including the negative electrode having the first protective layer formed on the lithium metal layer is operated, the second protective layer is formed between the lithium metal layer and the first protective layer. Specifically, if the charging and discharging of the lithium secondary battery is proceeded, the metal fluoride and the lithium salt are gradually released from the inside of the first protective layer having a simple mixed form of the metal fluoride and the lithium salt within the binder matrix, and react with lithium in the lithium metal layer to form materials such as LiF and LiNxOy, and a layer containing these materials is created, and the layer is referred to as the second protective layer. In this case, the lithium salt may increase the solubility of the metal fluoride through a co-solvation reaction with the metal fluoride during preparation of the coating solution, thereby serving to help prepare a uniform coating solution. In addition, when forming the second protective layer, it also increases the solubility of the metal fluoride in the electrolyte through a co-solvation reaction with metal fluoride, thereby serving to promote the release of fluorine ions and help to form the second protective layer.

### Lithium secondary battery

The other aspect of the present disclosure also relates to a lithium secondary battery including a positive electrode, a negative electrode, a separator, and an electrolyte solution.

In addition, the lithium secondary battery may be a lithium-sulfur secondary battery comprising sulfur as a positive electrode active material.

Alternatively, the lithium secondary battery may be a lithium metal battery comprising at least one selected from the group consisting of nickel·cobalt·manganese oxide (NCM, [Ni,Co, Mn]O₂), nickel·cobalt·manganese·aluminum oxide (NCMA, [Ni,Co,Mn,Al]O₂) and lithium iron phosphate (LFP, LiFePO₄) as a positive electrode active material.

### Negative electrode

In the lithium secondary battery according to the other aspect of the present disclosure, the negative electrode is the same as the negative electrode for the lithium secondary battery as described above.

### Positive electrode

In the lithium secondary battery according to the other aspect of the present disclosure, the positive electrode may comprise a positive electrode current collector; and a positive electrode active material layer formed on the positive electrode current collector.

The positive electrode active material layer may comprise a positive electrode active material, a binder, and an electrically conductive material.

If the positive electrode active material contains sulfur, the positive electrode active material may comprise elemental sulfur (S₈), a sulfur-based compound, or a mixture thereof, and the sulfur-based compound may specifically be Li₂Sn (n≥1), an organic sulfur compound or a sulfur-carbon composite ((C₂Sₓ)ₙ: x=2.5 to 50, n=2). In addition, among the positive electrode active materials, the sulfur-carbon composite reduces the outflow of sulfur into the electrolyte, and is a mixture of a carbon material and sulfur to increase the electrical conductivity of an electrode containing sulfur.

The sulfur-carbon composite may include sulfur and a carbon material, and specifically, may include the sulfur and the carbon material in a weight ratio of 55 to 90: 45 to 10. If the weight ratio of sulfur and the carbon material contained in the sulfur-carbon composite is satisfied, the capacity of the battery can be improved while the conductivity can be maintained.

In addition, the sulfur-carbon composite may be contained in an amount of 60 to 95% by weight based on the total weight of the positive electrode active material layer, and specifically, may be contained in an amount of 60% by weight or more, 70% by weight or more, or 80% by weight or more, and may be contained in an amount of 93% by weight or less, 94% by weight or less, or 95% by weight or less. If the content is less than the above range, the performance of the battery may be deteriorated. If the content exceeds the above range, the content of the binder and/or metal oxide-based additive other than the positive electrode active material is relatively reduced, and thus the durability may be reduced or the effect of improving the capacity of the positive electrode or the lifetime characteristics of the battery may be insignificant.

In addition, in the sulfur-carbon composite, the sulfur may be selected from the group consisting of elemental sulfur (S₈), a sulfur-based compound, or a sulfur-carbon composite. The sulfur-based compound may specifically be Li₂Sn (n≥1), an organic sulfur compound or a carbon-sulfur polymer ((C₂Sₓ)ₙ: x=2.5 to 50, n≥2).

In addition, in the sulfur-carbon composite, the carbon material may be a porous carbon material, and may generally be prepared by carbonizing precursors of various carbon materials.

The porous carbon material may comprise uneven pores therein, the average diameter of the pores is in the range of 1 to 200 nm, and specifically may be 1 nm or more, 5 nm or more, or 10 nm or more, and may be 100 nm or less, 150 nm or less, or 200 nm or less. In addition, the porosity of the porous carbon material may be in the range of 10 to 90% of the total volume of the porous carbon material, and specifically may be 10% or more, 15% or more, or 20% or more, and may be 70% or less, 80% or less, or 90% or less. If the average diameter and porosity of the pores are less than the above range, the pore size is only at the molecular level and thus impregnation with sulfur is impossible. On the contrary, if the average diameter and porosity of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in the lithium secondary battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon. Preferably, the porous carbon material may be graphite.

In addition, the binder may be styrene-butadiene rubber (SBR)/carboxymethyl cellulose (CMC), poly(vinyl acetate), polyvinyl alcohol, polyethylene oxide, polyvinyl pyrrolidone, alkylated polyethylene oxide, crosslinked polyethylene oxide, polyvinyl ether, poly(methyl methacrylate), polyvinylidene fluoride, copolymer (product name: Kynar) of polyhexafluoropropylene and polyvinylidene fluoride, poly(ethyl acrylate), polytetrafluoroethylene, polyvinylchloride, polyacrylonitrile, polyvinylpyridine, polystyrene, polyacrylic acid, and derivatives thereof, blends thereof, and copolymers thereof.

In addition, the content of the binder may be 1 to 20% by weight, preferably 3 to 18% by weight, more preferably 5 to 15% by weight based on the total weight of the positive electrode active material layer. If the content of the binder is less than the above range, the binding force between the positive electrode active materials or between the positive electrode active materials and the current collector is greatly improved, and the problem that capacity characteristic is deteriorated can also be prevented. In addition, it can be expected to inhibit the leaching of polysulfide by the interaction between polysulfide and a specific functional group in the polymer chain used as a binder. If the content of the binder exceeds the above range, the capacity of the battery may be lowered.

In addition, the electrically conductive material may be included to secure a movement path of lithium ions of the positive electrode.

The electrically conductive material may be at least one selected from the group consisting of carbon blacks selected from Super P, Denka black, acetylene black, Ketjen black, channel black, furnace black, lamp black, and thermal black; carbon derivatives selected from carbon nanotubes and fullerene; electrically conductive fibers selected from carbon fiber and metal fiber; metal powders selected from carbon fluoride, aluminum and nickel powder; and electrically conductive polymers selected from polyaniline, polythiophene, polyacetylene, and polyphenol.

The electrically conductive material may be contained in an amount of 1 to 20% by weight based on the total weight of the positive electrode active material layer, and specifically, the content of the electrically conductive material may be 1% by weight or more, 3% by weight or more, or 5% by weight or more, and may be 15% by weight or less, 18% by weight or less, or 20% by weight or less. If the content of the electrically conductive material is less than the above range, it is difficult to form and maintain a conductive structure and a path for moving lithium ions throughout the positive electrode active material layer, so that the effect of increasing the discharging capacity of the battery and improving the overvoltage may be insignificant. If the content of the electrically conductive material exceeds the above range, the lifetime of the battery may rather be reduced.

As described above, the positive electrode may be prepared by mixing a positive electrode active material, a binder, and an electrically conductive material in a solvent to prepare a slurry for the positive electrode, and then coating and drying the slurry for the positive electrode on a positive electrode current collector.

The solvent used in preparing the slurry for the positive electrode may be at least one selected from the group consisting of water (distilled water), methanol, ethanol, isopropyl alcohol, acetone, dimethyl sulfoxide, formamide, dimethylformamide, dioxolane, acetonitrile, nitromethane, acetic acid, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate and ethyl propionate, and in particular, if water (distilled water) or anhydrous alcohol-based solvent is used, it is desirable because it can prevent the damage of the positive electrode active material.

The concentration of the slurry for the positive electrode is not particularly limited as long as it is such that the coating process can be performed smoothly.

### Separator

In the other aspect of the present disclosure, the separator may be formed of a porous substrate, and the porous substrate may be any porous substrate conventionally used in an electrochemical device. For example, a polyolefin-based porous membrane or a nonwoven fabric may be used as the porous substrate, but it is not particularly limited thereto.

Examples of the polyolefin-based porous membrane may comprise a membrane formed of polyolefin-based polymer, such as polyethylene such as high-density polyethylene, linear lowdensity polyethylene, low density polyethylene and ultra-high molecular weight polyethylene, polypropylene, polybutylene, and polypentene, alone or a mixture thereof.

The nonwoven fabric may comprise, in addition to the polyolefin-based nonwoven fabric, for example, a nonwoven fabric formed of polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, and polyethylenenaphthalate alone or a mixture thereof. The structure of the nonwoven fabric may be a spun bond nonwoven fabric or a melt blown nonwoven fabric composed of long fibers.

The thickness of the porous substrate is not particularly limited, but may be 1 *µ*m to 100 *µ*m, or 5 *µ*m to 50 *µ*m.

The size and porosity of the pores present in the porous substrate are also not particularly limited, but may be 0.001 *µ*m to 50 *µ*m and 10% to 95%, respectively.

### Electrolyte solution

In the other aspect of the present disclosure, the electrolyte solution may be a nonaqueous electrolyte solution, and the electrolyte salt contained in the nonaqueous electrolyte solution is a lithium salt. The lithium salt is not particularly limited as long as it can be conventionally used in electrolyte solution for a lithium secondary battery. For example, the lithium salt may be at least one selected from the group consisting of LiFSI, LiPF₆, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₆, LiAlCl₄, CH₃SO₃Li, CF₃SO₃Li, (CF₃SO₂)₂NLi, lithium chloroborane, and 4-phenyl lithium borate.

As the organic solvent contained in the nonaqueous electrolyte solution, those conventionally used in an electrolyte solution for a lithium secondary battery may be used without limitation, and for example, ether, ester, amide, linear carbonate, cyclic carbonate, etc. may be used alone or in a mixture of two or more thereof. Among them, representatively, carbonate compounds that are cyclic carbonates, linear carbonates, or slurries thereof may be comprised.

Specific examples of the cyclic carbonate compound may comprise at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a slurry of two or more thereof. Examples of such halides comprise, but are not limited to, fluoroethylene carbonate (FEC).

In addition, specific examples of the linear carbonate compound may representatively comprise, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a slurry of two or more thereof. Particularly, among the carbonate-based organic solvents, ethylene carbonate and propylene carbonate which are cyclic carbonates are highly viscous organic solvents and have a high dielectric constant, and thus can dissociate lithium salts in the electrolyte much better. When these cyclic carbonates are used by mixing with linear carbonates having a low viscosity and a low dielectric constant, such as dimethyl carbonate and diethyl carbonate, at a suitable ratio, an electrolyte solution having the higher electrical conductivity can be prepared.

In addition, ether among the above organic solvents may be, but is not limited to, any one selected from the group consisting of dimethyl ether, diethyl ether, dipropyl ether, methylethyl ether, methylpropyl ether and ethylpropyl ether, or a slurry of two or more thereof.

In addition, ester among the above organic solvents may be, but is not limited to, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a slurry of two or more thereof.

The injection of the non-aqueous electrolyte solution can be performed at an appropriate stage during the manufacturing process of the electrochemical device, depending on the manufacturing process and required physical properties of the final product. That is, such injection can be carried out before assembling the electrochemical device or in the final stage of assembling the electrochemical device.

In the case of the lithium secondary battery according to the other aspect of the present disclosure, it is possible to perform laminating or stacking and folding processes of the separator and the electrode, in addition to the winding process which is a general process.

In addition, the shape of the battery case is not particularly limited, and may be of various shapes such as a cylindrical shape, a laminate shape, a prismatic shape, a pouch shape, or a coin shape. The structure and manufacturing method of these batteries are widely known in the art, and thus detailed description thereof will be omitted.

In addition, the lithium secondary battery may be classified into various batteries, such as a lithium-sulfur secondary battery, a lithium-air battery, a lithium-oxide battery, and a lithium all-solid-state battery, depending on the positive electrode/negative electrode material used.

In addition, provided is a battery module comprising the lithium secondary battery as a unit cell.

The battery module may be used as a power source of medium- or large-sized devices requiring high temperature stability, long cycle characteristics, and high-capacity characteristics.

Examples of the medium or large-sized devices may comprise, but are not limited to, a power tool that is powered and moved by an electric motor; electric cars including an electric vehicle (EV), a hybrid electric vehicle (HEV), and a plug-in hybrid electric vehicle (PHEV); an electric motorcycle including an electric bike (E-bike) and an electric scooter (E-scooter); an electric golf cart; and a power storage system.

### Example 1

### (1) Manufacture of negative electrode

A solution was prepared by dissolving MF₂, which is a metal fluoride, and LiNO₃, which is a lithium salt, in THF (tetrahydrofuran), which is a solvent. To the solution, PVDF-HFP, which is a binder, was added to prepare a coating solution for forming a first protective layer.

Using a bar coater, the coating solution for forming the first protective layer was applied to the surface of the lithium metal, and then dried at room temperature for 1 hour to manufacture a negative electrode having a first protective layer formed on the lithium metal. In this case, the contents of the metal fluoride, the binder, and the lithium salt in the first protective layer were set to 6.25% by weight, 62.5% by weight, and 31.25% by weight, respectively.

### (2) Manufacture of positive electrode

A mixture of 90% by weight of the positive electrode active material, 5% by weight of the electrically conductive material and 5% by weight of the binder is mixed in a solvent to prepare a slurry composition for a positive electrode. A sulfur-carbon composite (S:C=7:3 (w/w)) is used as the positive electrode active material, Denka black is used as the electrically conductive material, and styrene-butadiene rubber (SBR) /carboxymethyl cellulose (CMC) (SBR:CMC=7:3 (w/w)) was used as the binder, and H₂O was used as the solvent.

The slurry composition for the positive electrode was applied on an aluminum current collector, dried at 50 °C for 12 hours, and then pressed with a roll press to prepare a positive electrode.

### (3) Electrolyte

1M concentration of LiTFSI and 1% by weight of LiNO₃ were dissolved in an organic solvent (DOL: DME=1: 1 (v/v)) containing 1,3-dioxolane (DOL) and dimethyl ether (DME) to prepare an electrolyte.

### (4) Separator

A polyethylene porous film (68% porosity) having a thickness of 20 *µ*m was prepared.

### (5) Manufacture of lithium-sulfur secondary battery

After stacking the negative electrode on which the first protective layer was formed, the separator, and the positive electrode, 0.1 ml of the electrolyte was injected to prepare a lithium-sulfur secondary battery.

### Example 2

A lithium-sulfur secondary battery was manufactured in the same way as in Example 1, except that BaF₂ is used instead of MF₂ as the metal fluoride.

### Comparative Example 1

A lithium-sulfur secondary battery was manufactured in the same way as in Example 1, except that a lithium metal without a protective layer is used as a negative electrode.

### Comparative Example 2

A lithium-sulfur secondary battery was manufactured in the same way as in Example 1, except that the binder and the lithium salt are not used, MgF₂, which is a metal fluoride, is coated on the lithium metal, and then placed in a glove box under an argon atmosphere and heat treated at 180 °C for 3 minutes to form a protective layer on the lithium metal.

### Comparative Example 3

A lithium-sulfur secondary battery was manufactured in the same way as in Example 1, except that the lithium salt is not used, PVDF-HFP, which is a binder, is dissolved in NMP, which is a solvent, and then, MgF₂, which is a metal fluoride is added to prepare a slurry, and the slurry prepared is coated on lithium metal, and then vacuum-dried at 100 °C for 1 hour to form a protective layer on the lithium metal. In this case, the weight ratio of the metal fluoride and the binder was set to 1: 10 (MgF₂: PVDF-HFP=1: 1(w/w)).

### Experimental Example 1: Analysis of surface of negative electrode protective layer

For the analysis of the surface of the negative electrode protective layer, the lithium-sulfur secondary batteries prepared in the Example and the Comparative Example were discharged and charged repeatedly three times at 25 °C at a current density of 0.1C, and then discharged and charged once at a current density of 0.2C, and then the lithium-sulfur secondary batteries were disassembled and analyzed by XPS (X-ray photoelectron spectroscopy). Nexsa2 ESCA system (Thermo Fisher Scientific Co.) was used as the equipment.

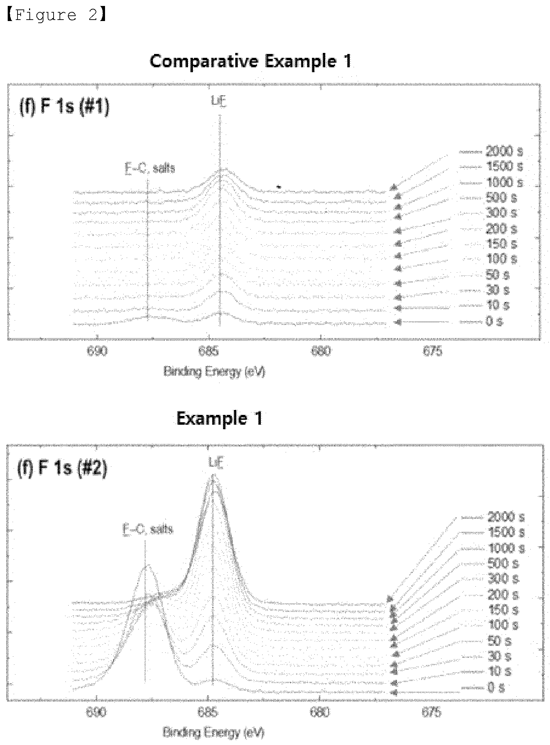

FIG. 2 is a graph showing the results of XPS (X-ray photoelectron spectroscopy) analysis of the negative electrode protective layer of the lithium-sulfur secondary batteries manufactured in Comparative Example 1 and Example 1.

Referring to FIG. 2, it can be seen that the layer containing LiF was confirmed on the negative electrode of the lithium-sulfur battery of Example 1 and from this, the second protective layer was formed, and also, it can be seen that the second protective layer is formed from F of MF₂, which is a metal fluoride, and Li of LiNO₃, which is a lithium salt, comprised in the first protective layer.

On the other hand, LiF was not confirmed in Comparative Example 1.

### Experimental Example 2: Evaluation of lifetime characteristics of battery

The retention rate of the discharge capacity was measured while discharging at 0.5C and charging at 0.3C at 25 °C for the lithium-sulfur secondary batteries comprising a negative electrode with a protective layer, manufactured in the Example and the Comparative Example, thereby evaluating the lifetime characteristics of the battery.

Table 1 below shows the results of measuring the number of cycle repetitions when the retention rate of 80% discharging capacity is reached for the lithium-sulfur secondary batteries of Example 1 and Comparative Example 1.

**Table 1:**

| | Number of cycle repetition (times, @ retention rate of 80% capacity) |
|---|---|
| Example 1 | 338 |
| Comparative Example 1 | 128 |
| Comparative Example 2 | 197 |
| Comparative Example 3 | 222 |

Referring to Table 1 above, it can be seen that Example 1 has a much higher number of cycle repetitions maintaining 80% discharging capacity as compared to Comparative Examples 1 to 3.

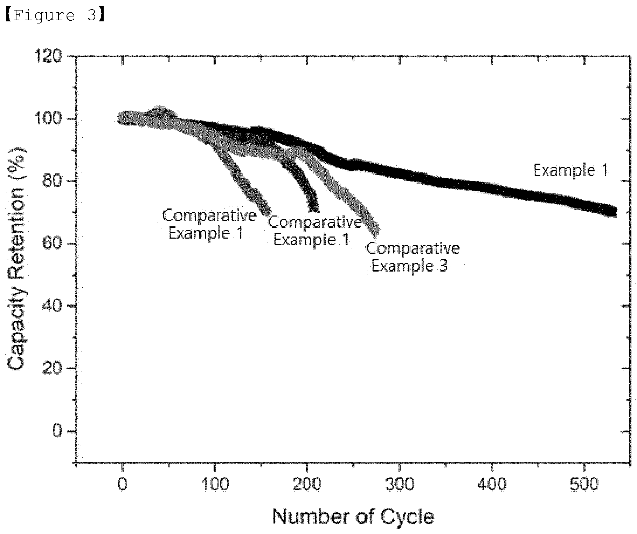

FIG. 3 is a graph showing the results of evaluation of lifetime characteristics of protective layers of negative electrodes of lithium-sulfur secondary batteries manufactured in Comparative Example 1 and Example 1.

Referring to FIG. 3, it can be seen that the lifetime characteristics of Example 1 are superior to those of Comparative Example 1.

### [Description of Symbol]

1: Negative electrode for lithium secondary battery
10: Lithium metal layer
20: First protective layer
30: Second protective layer

## Claims

1. A negative electrode for a lithium secondary battery, comprising a lithium metal layer; and a first protective layer,
wherein the first protective layer comprises a metal fluoride represented by Formula 1 below, a binder, and a lithium salt:
<Formula 1> MFx
wherein M is Mg, Zn, Sn, Cu, Al, Ag, Ba, Co, Ca, Ni, Ta, Mn, In or Fe, and the x is 1 to 7,
wherein the first protective layer comprises 5 to 10% by weight of the metal fluoride, 50 to 70% by weight of the binder, and 20 to 40% by weight of the lithium salt,
wherein the negative electrode for the lithium secondary battery further comprises a second protective layer formed between the lithium metal layer and the first protective layer and the second protective layer contains LiF, and
wherein the second protective layer further comprises at least one selected from the group consisting of LiNxOy, wherein x is 1 or 2, and y is 2 or 3, Li₃N, Li₂O, Li₂CO₃, Li₂S and Li₂S₂.

2. The negative electrode for the lithium secondary battery according to claim 1, wherein the binder comprises at least one selected from the group consisting of polyvinylidene fluoride-co-hexafluoropropylene (PVDF-HFP), polyvinylidene fluoride (PVDF), polyvinyl alcohol (PVA), polyacrylic acid (PAA), polymethacrylic acid (PMA), polymethyl methacrylate (PMMA), polyacrylamide (PAM), polymethacrylamide (PMAM), polyacrylonitrile (PAN), polymethacrylonitrile (PMN) and polyimide (PI).

3. The negative electrode for the lithium secondary battery according to claim 1, wherein the lithium salt comprises at least one selected from the group consisting of (CF₃SO₂)₂NLi, (FSO₂)₂NLi, LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

4. A method for manufacturing a negative electrode for a lithium secondary battery according to claim 1 comprising the steps of,
(S1) preparing a solution by dissolving metal fluoride and lithium salt in a solvent;
(S2) preparing a coating solution for forming a first protective layer by adding a binder to the solution; and
(S3) applying the coating solution for forming the first protective layer on the lithium metal and drying it,
wherein after forming the negative electrode for the lithium secondary battery, a second protective layer containing LiF is formed between the lithium metal layer and the first protective layer during operation of the lithium secondary battery.

5. The method for manufacturing the negative electrode for the lithium secondary battery according to claim 4, wherein the solvent comprises at least one selected from the group consisting of dimethoxyethane (DME), tetrahydrofuran (THF), dimethyl sulfoxide (DMSO), 1-methyl-2-pyrrolidone (NMP) and dimethyl formamide (DMF).

6. The method for manufacturing the negative electrode for the lithium secondary battery according to claim 4, wherein the coating method is bar coating, roll coating, spin coating, slit coating, die coating, blade coating, comma coating, slot die coating, lip coating or solution casting.

7. A lithium secondary battery comprising a positive electrode, the negative electrode of claim 1, a separator and an electrolyte.

8. The lithium secondary battery according to claim 7, wherein the positive electrode comprises sulfur.

9. The lithium secondary battery according to claim 7, wherein the positive electrode is a lithium metal battery comprising at least one selected from the group consisting of nickel·cobalt·manganeseoxide (NCM, [Ni, Co, Mn]O₂), nickel·cobalt·manganese·aluminum oxide (NCMA, [Ni, Co,Mn,Al]O₂) and lithium iron phosphate (LFP, LiFePO₄) as a positive electrode active material.

## Patentansprüche

1. Negative Elektrode für eine Lithium-Sekundärbatterie, umfassend eine Lithium-Metallschicht; und eine erste Schutzschicht,
wobei die erste Schutzschicht ein durch die nachstehende Formel 1 dargestelltes Metallfluorid, ein Bindemittel und ein Lithiumsalz umfasst:
<Formel 1> MFx
wobei M Mg, Zn, Sn, Cu, Al, Ag, Ba, Co, Ca, Ni, Ta, Mn, In oder Fe ist und x 1 bis 7 ist,
wobei die erste Schutzschicht 5 bis 10 Gew.-% des Metallfluorids, 50 bis 70 Gew.-% des Bindemittels und 20 bis 40 Gew.-% des Lithiumsalzes umfasst,
wobei die negative Elektrode für die Lithium-Sekundärbatterie ferner eine zweite Schutzschicht umfasst, die zwischen der Lithium-Metallschicht und der ersten Schutzschicht gebildet ist, und die zweite Schutzschicht LiF enthält, und
wobei die zweite Schutzschicht ferner mindestens eines umfasst, das aus der Gruppe ausgewählt ist, die aus LiNxOy, wobei x 1 oder 2 ist und y 2 oder 3 ist, Li₃N, Li₂O, Li₂CO₃, Li₂S und Li₂S₂ besteht.

2. Negative Elektrode für die Lithium-Sekundärbatterie nach Anspruch 1, wobei das Bindemittel mindestens eines umfasst, das aus der Gruppe ausgewählt ist, die aus Polyvinylidenfluorid-cohexafluorpropylen (PVDF-HFP), Polyvinylidenfluorid (PVDF), Polyvinylalkohol (PVA), Polyacrylsäure (PAA), Polymethacrylsäure (PMA), Polymethylmethacrylat (PMMA), Polyacrylamid (PAM), Polymethacrylamid (PMAM), Polyacrylnitril (PAN), Polymethacrylnitril (PMN) und Polyimid (PI) besteht.

3. Negative Elektrode für die Lithium-Sekundärbatterie nach Anspruch 1, wobei das Lithiumsalz mindestens eines umfasst, das aus der Gruppe ausgewählt ist, die aus (CF₃SO₂)₂NLi, (FSO₂)₂NLi, LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN und LiC(CF₃SO₂)₃ besteht.

4. Verfahren zur Herstellung einer negativen Elektrode für eine Lithium-Sekundärbatterie nach Anspruch 1, umfassend die Schritte:
(S1) Herstellen einer Lösung durch Auflösen von Metallfluorid und Lithiumsalz in einem Lösungsmittel;
(S2) Herstellen einer Beschichtungslösung zum Bilden einer ersten Schutzschicht durch Zugeben eines Bindemittels zu der Lösung; und
(S3) Aufbringen der Beschichtungslösung zum Bilden der ersten Schutzschicht auf das Lithiummetall und Trocknen derselben,
wobei nach dem Bilden der negativen Elektrode für die Lithium-Sekundärbatterie eine zweite Schutzschicht, die LiF enthält, zwischen der Lithium-Metallschicht und der ersten Schutzschicht während des Betriebs der Lithium-Sekundärbatterie gebildet wird.

5. Verfahren zur Herstellung der negativen Elektrode für die Lithium-Sekundärbatterie nach Anspruch 4, wobei das Lösungsmittel mindestens eines umfasst, das aus der Gruppe ausgewählt ist, die aus Dimethoxyethan (DME), Tetrahydrofuran (THF), Dimethylsulfoxid (DMSO), 1-Methyl-2-pyrrolidon (NMP) und Dimethylformamid (DMF) besteht.

6. Verfahren zur Herstellung der negativen Elektrode für die Lithium-Sekundärbatterie nach Anspruch 4, wobei das Beschichtungsverfahren Stabbeschichten, Walzenbeschichten, Rotationsbeschichten, Schlitzbeschichten, Düsenbeschichten, Rakelbeschichten, Kommabeschichten, Schlitzdüsenbeschichten, Lippenbeschichten oder Lösungsgießen ist.

7. Lithium-Sekundärbatterie, umfassend eine positive Elektrode, die negative Elektrode nach Anspruch 1, einen Separator und einen Elektrolyten.

8. Lithium-Sekundärbatterie nach Anspruch 7, wobei die positive Elektrode Schwefel umfasst.

9. Lithium-Sekundärbatterie nach Anspruch 7, wobei die positive Elektrode eine Lithium-Metallbatterie ist, die mindestens eines umfasst, das aus der Gruppe ausgewählt ist, die aus Nickel-Kobalt-Manganoxid (NCM, [Ni,Co,Mn]O₂), Nickel-Kobalt-Mangan-Aluminiumoxid (NCMA, [Ni,Co,Mn,Al]O₂) und Lithiumeisenphosphat (LFP, LiFePO₄) als aktives Material der positiven Elektrode besteht.

## Revendications

1. Électrode négative pour une batterie rechargeable au lithium, comprenant une couche de métal lithium ; et une première couche protectrice,
dans laquelle la première couche protectrice comprend un fluorure de métal représenté par la Formule 1 ci-dessous, un liant et un sel de lithium :
<Formule 1> MFx
dans laquelle M est Mg, Zn, Sn, Cu, Al, Ag, Ba, Co, Ca, Ni, Ta, Mn, dans ou Fe, et le x est 1 à 7,
dans laquelle la première couche protectrice comprend 5 à 10 % en poids du fluorure de métal, 50 à 70 % en poids du liant et 20 à 40 % en poids du sel de lithium,
dans laquelle l'électrode négative pour la batterie rechargeable au lithium comprend en outre une deuxième couche protectrice formée entre la couche de métal lithium et la première couche protectrice et la deuxième couche protectrice contient LiF, et
dans laquelle la deuxième couche protectrice comprend en outre un ou plusieurs éléments sélectionnés dans le groupe constitué de LiNxOy, dans laquelle x est 1 ou 2, et y est 2 ou 3, Li₃N, Li₂O, Li₂CO₃, Li₂S et Li₂S₂.

2. Électrode négative pour la batterie rechargeable au lithium selon la revendication 1, dans laquelle le liant comprend un ou plusieurs éléments sélectionnés dans le groupe constitué de fluorure de vinylidène-co-hexafluoropropylène (PVDF-HFP), fluorure de polyvinylidène (PVDF), alcool vinylique (PVA), acide polyacrylique (PAA), acide polyméthacrylique (PMA), méthacrylate de polyméthyle (PMMA), polyacrylamide (PAM), polyméthacrylamide (PMAM), polyacrylonitrile (PAN), polyméthacrylonitrile (PMN) et polyimide (PI).

3. Électrode négative pour la batterie rechargeable au lithium selon la revendication 1, dans laquelle le sel de lithium comprend un ou plusieurs éléments sélectionnés dans le groupe constitué de (CF₃SO₂)₂NLi, (FSO₂)₂NLi, LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN et LiC(CF₃SO₂)₃.

4. Procédé de fabrication de l'électrode négative pour une batterie rechargeable au lithium selon la revendication 1, comprenant les étapes consistant à,
(S1) préparer une solution en dissolvant un fluorure de métal et un sel de lithium dans un solvant ;
(S2) préparer une solution de revêtement pour former une première couche protectrice en ajoutant un liant à la solution ; et
(S3) appliquer la solution de revêtement pour former la première couche protectrice sur le métal lithium et la sécher,
dans lequel, après la formation de l'électrode négative pour la batterie rechargeable au lithium, une deuxième couche protectrice contenant LiF est formée entre la couche de métal lithium et la première couche protectrice pendant le fonctionnement de la batterie rechargeable au lithium.

5. Procédé de fabrication de l'électrode négative pour la batterie rechargeable au lithium selon la revendication 4, dans lequel le solvant comprend un ou plusieurs éléments sélectionnés dans le groupe constitué de diméthoxyéthane (DME), tétrahydrofurane (THF), diméthylsulfoxyde (DMSO), 1-méthyl-2-pyrrolidone (NMP) et diméthylformamide (DMF).

6. Procédé de fabrication de l'électrode négative pour la batterie rechargeable au lithium selon la revendication 4, dans lequel le procédé de revêtement est un revêtement à la barre, revêtement au rouleau, revêtement par centrifugation, revêtement à fente, revêtement à filière, revêtement à la lame, revêtement comma, revêtement par filière à fente, revêtement par effleurement ou coulage de solution.

7. Batterie rechargeable au lithium comprenant une électrode positive, l'électrode négative selon la revendication 1, un séparateur et un électrolyte.

8. Batterie rechargeable au lithium selon la revendication 7, dans laquelle l'électrode positive comprend du soufre.

9. Batterie rechargeable au lithium selon la revendication 7, dans laquelle l'électrode positive est une batterie au lithium métal comprenant un ou plusieurs éléments sélectionnés dans le groupe constitué d'un oxyde de nickel·cobalt·manganèse (NCM, [Ni,Co,Mn]O₂), oxyde de nickel·cobalt·manganèse·aluminium (NCMA, [Ni,Co,Mn,Al]O₂) et phosphate de lithium fer (LFP, LiFePO₄) qui est un matériau actif d'électrode positive.
